# EUROPÄISCHE PATENTSCHRIFT

(11) **EP 1 736 807 B1**
(45) Veröffentlichungstag und Bekanntmachung des Hinweises auf die Patenterteilung: **28.07.2010**
(21) Anmeldenummer: 06010602.8
(22) Anmeldetag: 23.05.2006
(51) Int. Cl.: G02B 6/44

(54) **Vorrichtung zur Abfangung von in Mikroducts geführten Mikrokabeln sowie der Mikroducts**
Device for supporting microcables guided in microducts and the microducts
Dispositif destiné à la fixation de microcâbles dirigés dans des microconduits et de microconduits

(30) Priorität: 22.06.2005 DE 202005009932 U
(43) Veröffentlichungstag der Anmeldung: 27.12.2006
(73) Patentinhaber: CCS Technology, Inc., Wilmington, DE 19803 (US)
(72) Erfinder: Syplacz, Roman, 58099 Hagen (DE); Müller, Thorsten, 58708 Menden (DE); Kluwe, Wolf, 58119 Hagan (DE)
(74) Vertreter: Sturm, Christoph

(56) Entgegenhaltungen:
- EP-A- 0 367 477
- EP-A- 0 505 104
- WO-A-00/72072
- WO-A-2005/020400
- AU-B2- 659 959
- US-A- 5 793 920

## Beschreibung

Die Erfindung betrifft eine Vorrichtung zur Abfangung von in Mikroducts geführten Mikrokabeln sowie der Mikroducts nach dem Oberbegriff des Anspruchs 1.

Aus dem Stand der Technik ist es bereits bekannt, Lichtwellenleiterkabelnetze aus in Verlegeröhrchen - sogenannten Mikroducts bzw. Miniducts - geführten Mikrokabeln bzw. Minikabeln aufzubauen. Derartige Mikrokabel bzw. Minikabel verfügen über einen Außendurchmesser bis max. in etwa 7 mm und werden üblicherweise in die Mikroducts eingeblasen. In jedem Mikroduct verläuft dabei maximal ein Mikrokabel.

Beim Aufbau von Lichtwellenleiterkabelnetzen ist es erforderlich, sogenannte Verbindungsstellen bzw. Abzweigstellen für die Mikrokabel vorzusehen, wobei an den Verbindungsstellen bzw. Abzweigstellen Spleiße zwischen in Mikrokabeln geführten Lichtwellenleitern ausgebildet werden. Zum Schutz der Spleißverbindungen an den Verbindungsstellen bzw. Abzweigstellen werden die Spleißverbindungen in sogenannten Kabelmuffen abgelegt, wobei bei aus in Mikroducts geführten Mikrokabeln aufgebauten Lichtwellenleiterkabelnetzen sowohl die Mikroducts als auch die Mikrokabel in eine Kabelmuffe eingeführt und innerhalb der Kabelmuffe gegenüber einer Zugbeanspruchung sowie gegebenenfalls auch Torsionsbeanspruchung abgefangen werden müssen. Bislang sind aus dem Stand der Technik keine Vorrichtungen bekannt, mit denen in Mikroducts geführte Mikrokabel effektiv abgefangen werden können.

Als Stand der Technik wird verwiesen auf EP-A-0 367 477, US-A-5 793 920 sowie AU 659 959 A2.

Hiervon ausgehend liegt der vorliegenden Erfindung das Problem zu Grunde, eine neuartige Vorrichtung zur Abfangung von in Mikroducts geführten Mikrokabeln sowie der Mikroducts zu schaffen.

Dieses Problem wird eine Vorrichtung zur Abfangung von in Mikroducts geführten Mikrokabeln und der Mikroducts gemäß Anspruch 1 gelöst. Erfindungsgemäß ist das Befestigungselement zur Aufnahme bzw. Lagerung des ersten Abfangelements und des zweiten Abfangelements als stabförmige Befestigungsachse ausgebildet, welche in Ausnehmungen bzw. Bohrungen der Abfangelemente geführt ist und dieselben durchdringt, wobei die Befestigungsachse Abschnitte zur Lagerung der Abfangelemente aufweist, deren Aussendruchmesser an den Innendurchmesser der Bohrung in dem aufzunehmenden Abfangelement angepasst ist, und wobei die Position der Abfangelemente auf den Abschnitten des Befestigungselements durch widerhakenartige Verankerungselemente gesichert ist, die mit im Bereich der Abschnitte ausgebildeten Absätzen zusammenwirken.

Mit der hier vorliegenden Erfindung wird eine Vorrichtung zur Abfangung von in Mikroducts geführten Mikrokabeln und der Mikroducts vorgeschlagen, die über ein erstes Abfangelement zur Zugabfangung und Torsionsabfangung mindestens eines Mikroducts und ein zweites Abfangelement zur Zugabfangung und Torsionsabfangung mindestens eines Mikrokabels verfügt. Die beiden Abfangelemente sind an einem gemeinsamen Befestigungselement mit Abstand voneinander gelagert. Die erfindungsgemäße Vorrichtung verfügt demnach über mindestens zwei Abfangelemente, wobei das erste Abfangelement ausschließlich der Abfangung der Mikroducts und das zweite Abfangelement ausschließlich der Abfangung der Mikrokabel dient. Die erfindungsgemäße Vorrichtung zeichnet sich durch einen einfachen Aufbau aus und erlaubt eine effektive sowie verdrehsichere Abfangung von in Mikrokabeln geführten Mikroducts innerhalb einer Lichtwellenleiterverteilereinrichtung, vorzugsweise innerhalb einer Kabelmuffe.

Vorzugsweise weisen das erste Abfangelement und das zweite Abfangelement über den Umfang derselben verteilt mehrere kreissegmentförmige Aufnahmeöffnung auf, in welche jeweils ein Mikroduct bzw. ein Mikrokabel einschnappbar bzw. einrastbar sind.

Nach einer vorteilhaften Weiterbildung der Erfindung weist die erfindungsgemäße Vorrichtung zur Abfangung von in Mikroducts geführten Mikrokabeln und der Mikroducts ein drittes Abfangelement zur Abfangung mindestens eines Zentralelements des oder jedes Mikrokabels auf, wobei das dritte Abfangelement zusammen mit dem ersten Abfangelement und dem zweiten Abfangelement an dem gemeinsamen Befestigungselement derart gelagert ist, dass das zweite Abfangelement zwischen dem ersten Abfangelement und dem dritten Abfangelement positioniert ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- **Fig. 1:**: eine perspektivische Ansicht einer erfindungsgemäßen Vorrichtung zur Abfangung von in Mikroducts geführten Mikrokabeln sowie der Mikroducts nach einem ersten Ausführungsbeispiel der Erfindung zusammen mit einer Lagerungseinrichtung zur Lagerung der erfindungsgemäßen Vorrichtung an einer Lichtwellenleiterverteilereinrichtung;
- **Fig. 2:**: die Anordnung gemäß Fig. 1 ohne Dichtelemente zwischen den Mikroducts und den in den Mikroducts geführten Mikrokabeln;
- **Fig. 3:**: die Anordnung gemäß Fig. 1 in einer teilweisen Explosionsdarstellung;
- **Fig. 4 bis 7:**: Einzelteile der erfindungsgemäßen Vorrichtung zur Abfangung von in Mikroducts geführten Mikrokabeln sowie der Mikroducts;
- **Fig. 8 bis 9:**: Einzelteile der Lagerungseinrichtung zur Lagerung der erfindungsgemäßen Vorrichtung an einer Lichtwellenleiterverteilereinrichtung;
- **Fig. 10:**: eine perspektivische Ansicht einer erfindungsgemäßen Vorrichtung zur Abfangung von in Mikroducts geführten Mikrokabeln sowie der Mikroducts nach einem zweiten Ausführungsbeispiel der Erfindung zusammen mit der Lagerungseinrichtung zur Lagerung der erfindungsgemäßen Vorrichtung an einer Lichtwellenleiterverteilereinrichtung; und
- **Fig. 11:**: eine perspektivische Ansicht einer erfindungsgemäßen Vorrichtung zur Abfangung von in Mikroducts geführten Mikrokabeln sowie der Mikroducts nach einem dritten Ausführungsbeispiel der Erfindung zusammen mit der Lagerungseinrichtung zur Lagerung der erfindungsgemäßen Vorrichtung an einer Lichtwellenleiterverteilereinrichtung.

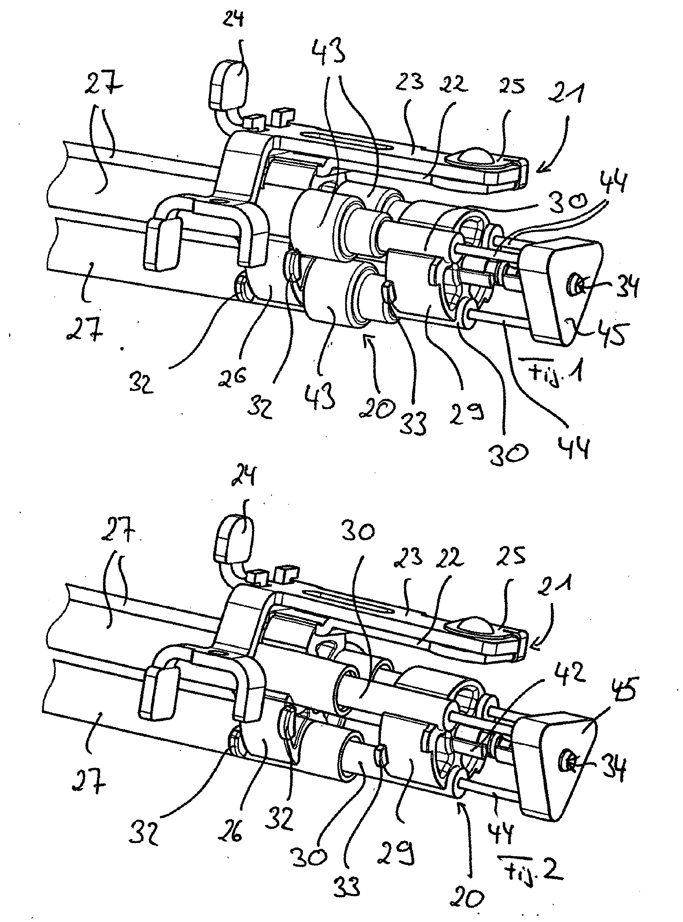

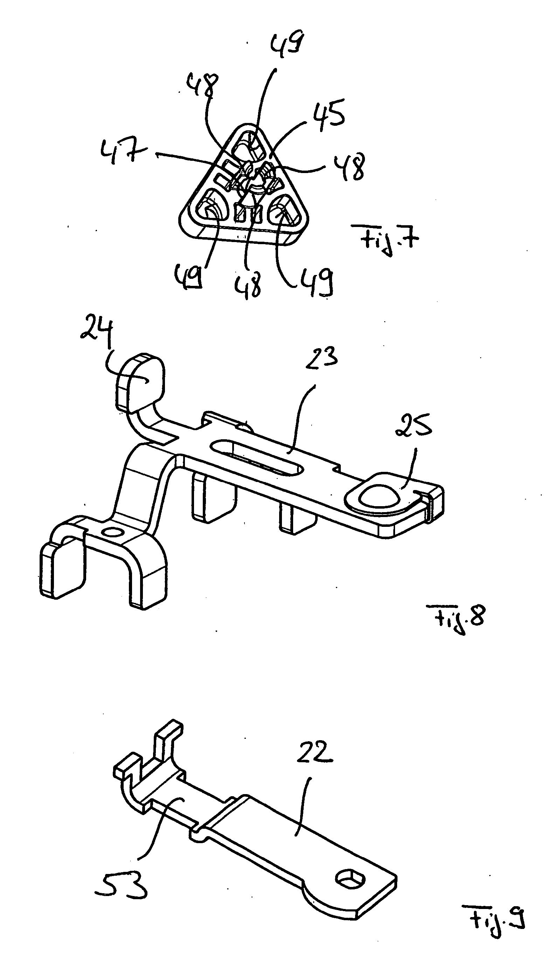

Nachfolgend wird die hier vorliegende Erfindung unter Bezugnahme auf Fig. 1 bis 11 in größerem Detail beschrieben.

Fig. 1 bis 9 zeigen ein erstes Ausführungsbeispiel einer erfindungsgemäßen Vorrichtung 20 zur Abfangung von in Mikroducts geführten Mikrokabeln sowie der Mikroducts zusammen mit einer Lagerungseinrichtung 21 über welche die erfindungsgemäße Vorrichtung 20 an einer Lichtwellenleiterverteilereinrichtung, vorzugsweise an einem Dichtkörper einer Kabelmuffe, gelagert werden kann.

Die Lagerungseinrichtung 21 wird aus zwei Baugruppen gebildet, nämlich aus einem Lagerungsmodul 22 und einer Lagerungsbasis 23. Über das Lagerungsmodul 22 ist die erfindungsgemäße Vorrichtung 20 zur Abfangung von in Mikroducts geführten Mikrokabeln sowie der Mikroducts an der Lagerungseinrichtung 21 befestigbar. Über die Lagerungsbasis 23 hingegen ist die Lagerungseinrichtung 21 zusammen mit der erfindungsgemäßen Vorrichtung 20 an der Lichtwellenleiterverteilereinrichtung, vorzugsweise am Dichtkörper einer Kabelmuffe, lagerbar, wobei hierzu ein Vorsprung 24 der Lagerungsbasis 23 in eine auf einer Innenseite des Dichtkörpers einer Kabelmuffe positionierte Führung eingreift.

Das Lagerungsmodul 22 sowie die Lagerungsbasis 23 der Lagerungseinrichtung 21 sind über ein Verbindungselement 25 miteinander verbindbar, welches im gezeigten Ausführungsbeispiel als Drehclip ausgeführt ist. An dieser Stelle sei darauf hingewiesen, dass die Lagerungseinrichtung 21, die vom Lagerungsmodul 22 und der Lagerungsbasis 23 gebildet wird, lediglich der Lagerung bzw. Anbindung der erfindungsgemäßen Vorrichtung 20 zur Abfangung von in Mikroducts geführten Mikrokabeln in einer bzw. an einer vorzugsweise als Kabelmuffe ausgebildeten Lichtwellenleiterverteilereinrichtung dient.

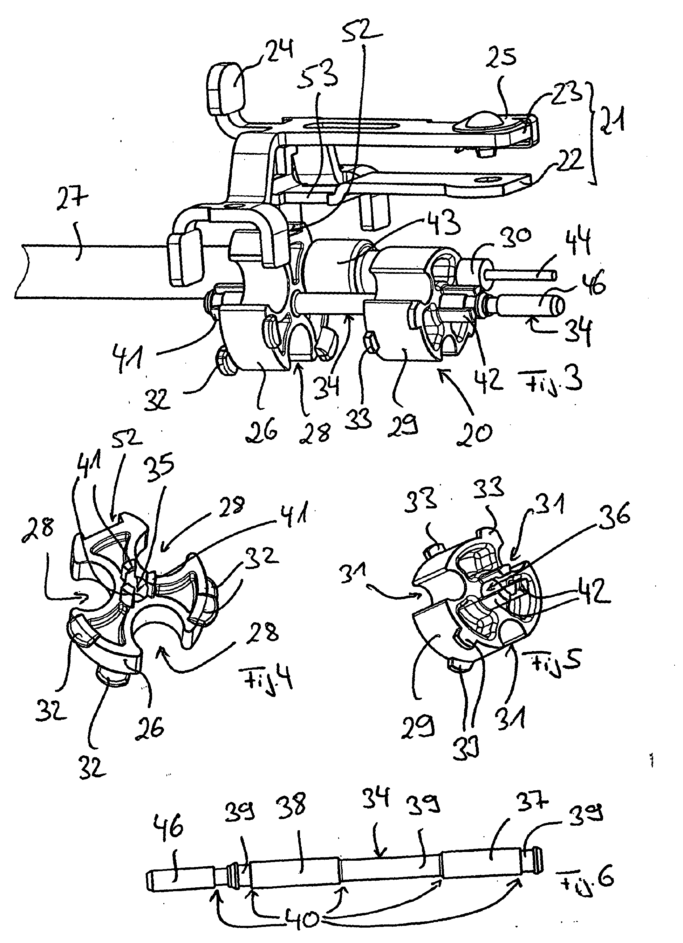

Die erfindungsgemäße Vorrichtung 20 zur Abfangung von in Mikroducts geführten Mikrokabeln verfügt über mindestens zwei Abfangelemente. Ein erstes Abfangelement 26 dient der Zugabfangung und Torsionsabfangung mindestens eines Mikroducts 27, wobei im Ausführungsbeispiel der Fig. 1 bis 9 in dem ersten Abfangelement 26 insgesamt drei Mikroducts 27 abgefangen werden können. Hierzu verfügt das erste Abfangelement 26 (siehe insbesondere Fig. 4) über drei kreissegmentförmige Aufnahmeöffnungen 28, wobei in jede kreissegmentförmige Aufnahmeöffnung 28 jeweils ein Mikroduct 27 einsteckbar bzw. einrastbar ist. Ein zweites Abfangelement 29 dient der Zugabfangung und Torsionsabfangung mindestens eines in einem Mikroduct 27 geführten Mikrokabels 30. Im Ausführungsbeispiel der Fig. 1 bis 3 dient das zweite Abfangelement 29 der Abfangung von drei Mikrokabeln 30, wobei jedes Mikrokabel 30 in einem Mikroduct 27 verläuft. Wie insbesondere Fig. 5 entnommen werden kann, verfügt das zweite Abfangelement 29 ebenso wie das erste Abfangelement 26 über kreissegmentförmige Aufnahmeöffnungen 31, in welche die Mikrokabel 30 eingesteckt bzw. eingerastet werden können.

Die kreissegmentförmigen Aufnahmeöffnungen 28 bzw. 31 der Abfangelemente 26 bzw. 29 sind vorzugsweise über den Umfang der ringförmig ausgebildeten Abfangelemente 26 bzw. 29 gleichverteilt positioniert. Die Abfangelemente könne auch als Abfangsterne bezeichnet werden.

An dieser Stelle sei darauf hingewiesen, dass die in das erste Abfangelement 26 eingesteckten Mikroducts 27 und die in das zweite Abfangelement 29 eingesteckten Mikrokabel 30 in ihrer Position am jeweiligen Abfangelement 26 bzw. 29 vorzugsweise über nicht-dargestellte Schellen bzw. Kabelbinder gesichert bzw. fixiert werden, wobei sich die nicht-dargestellten Schellen jeweils in Umfangsrichtung um das jeweilige Abfangelement 26 bzw. 29 herum erstrecken und in ihrer Axialposition auf dem jeweiligen Abfangelement 26 bzw. 29 über sich in radialer Richtung erstreckende Vorsprünge 32 bzw. 33 geführt bzw. gesichert werden.

Das erste Abfangelement 26 zur Zugabfangung und Torsionsabfangung mindestens eines Mikroducts 27 und das zweite Abfangelement 29 zur Zugabfangung und Torsionsabfangung mindestens eines in einem Mikroduct 27 geführten Mikrokabels 30 sind an einem gemeinsamen Befestigungselement 34 mit Abstand voneinander befestigt bzw. gelagert. Das Befestigungselement 34 ist, wie insbesondere Fig. 6 zeigt, als stabförmige Befestigungsachse ausgebildet, wobei die Abfangelemente 26 und 29 über in dieselben integrierte Bohrungen 35 bzw. 36 auf das Befestigungselement 34 aufgeschoben werden können. Wie Fig. 6 entnommen werden kann, verfügt das Befestigungselement 34 über Abschnitte zur Aufnahme bzw. Lagerung der Abfangelemente 26 und 29, wobei ein Abschnitt 37 der Aufnahme bzw. Lagerung des ersten Abfangelements 26 zur Abfangung der Mikroducts 27 und ein zweiter Abschnitt 38 der Aufnahme bzw. Lagerung des zweiten Abfangelements 29 zur Abfangung der Mikrokabel 30 dient.

Der Außendurchmesser der Abschnitte 37 und 38 ist dabei an den Innendurchmesser der Bohrungen 35 und 36 der Abfangelemente 26 und 29 angepasst, wobei sich an die Abschnitte 37 und 38 des Befestigungselements 34 unmittelbar anschließende Abschnitte 39 desselben einen verringerten Außendurchmesser aufweisen, so dass zwischen den Abschnitten 37 und 39 sowie den Abschnitten 38 und 39 stufenartige Absätze 40 ausgebildet sind. Mit einigen dieser Absätze 40 wirken widerhakenartige Verankerungselemente 41 bzw. 42 der Abfangelemente 26 und 29 zusammen, um die Abfangelemente 26 und 29 in ihre Relativposition zueinander auf dem Befestigungselement 34 zu fixieren. Wie am besten Fig. 3 entnommen werden kann, sind in montierter Position die widerhakenartige Verankerungselemente 41 und 42 an voneinander abgewandten Seiten der Abfangelemente 29 sowie 30 angeordnet.

Zwischen dem Abfangelement 26 zur Zugabfangung und Torsionsabfangung der Mikroducts 27 und dem zweiten Abfangelement 29 zur Zugabfangung und Torsionsabfangung der Mikrokabel 30 ist in auf dem Befestigungselement 34 montierter Position ein Zwischenraum ausgebildet, in welchem vorzugsweise auf die Mikroducts 27 und die Mikrokabel 30 aufgeschobene Dichtelemente 43 Aufnahme finden. Die Dichtelemente 43 dienen der Abdichtung eines Mikroducts 27 gegenüber dem in dem jeweiligen Mikroduct 27 geführten Mikrokabel 30, wobei die Dichtelemente 43 vorzugsweise als Silikontülle ausgebildet sind und über zwei an den Außendurchmesser der Mikroducts 27 sowie der Mikrokabel 30 angepasste Abschnitte aufweisen. Zur Fixierung der Dichtelemente 43 auf den Mikroduct 27 kann vorgesehen werden, um das Dichtelement 43 einen Kabelbinder zu führen, welches das Dichtelement 43 auf dem jeweiligen Mikroduct 27 fixiert. In dem Fall, in welchem in einem Mikroduct 27 kein Mikrokabel geführt ist, ist das Dichtelement 43 in dem Abschnitt, welcher an den Außendurchmesser der Mikrokabel 30 angepasst ist, verschlossen.

In dem Fall, in welchem mit der erfindungsgemäßen Vorrichtung 20 Mikrokabel 30, die ein Zentralelement 44 umfassen, abgefangen werden sollen, verfügt die erfindungsgemäße Vorrichtung 20 neben dem ersten Abfangelement 26 und dem zweiten Abfangelement 29 über ein drittes Abfangelement 45 zur Abfangung der Zentralelemente 44 der Mikrokabel 30. Das dritte Abfangelement 45 zur Zugabfangung und Torsionsabfangung der Zentralelemente 44 ist zusammen mit dem ersten Abfangelement 26 zur Abfangung der Mikroducts 27 und dem zweiten Abfangelement 29 zur Abfangung der Mikrokabel 30 auf dem Befestigungselement 34 gelagert, wobei das Befestigungselement 34 hierzu über einen Abschnitt 46 verfügt, auf welchen das dritte Abfangelement 45 über eine in das Abfangelement 45 integrierte Bohrung 47 aufgeschoben werden kann. Der Innendurchmesser der Bohrung 47 ist dabei wiederum einen Außendurchmesser des Abschnitts 46 des Befestigungselements 34 angepasst, wobei die Axialposition des dritten Abfangelements 45 über widerhakenartige Verankerungselemente 28 des dritten Abfangelements 45 gewährleistet wird, welche mit dem sich an den Abschnitt 46 anschließenden Absatz 40 zusammenwirken. In montierter Position ist das zweite Abfangelement 29 zur Abfangung der Mikrokabel 30 zwischen dem ersten Abfangelement 26 zur Abfangung der Mikroducts 27 und dem dritten Abfangelement 45 zur Abfangung des Zentralelements 44 positioniert. Zur Abfangung der Zentralelemente 44 sind im Ausführungsbeispiel der Fig. 1 bis 9 in das dritte Abfangelement 45 drei Aufnahmeöffnungen 49 für jeweils ein Zentralelement 44 integriert.

Das in Fig. 1 bis 9 dargestellte Ausführungsbeispiel einer erfindungsgemäßen Vorrichtung 20 zur Abfangung von in Mikroducts geführten Mikrokabeln sowie der Mikroducts dient der Abfangung von insgesamt drei Mikrokabeln 30, wobei jedes Mikrokabel 30 in einem Mikroduct 27 geführt ist und jeweils ein Zentralelement 44 aufweist. Zur Abfangung der drei Mikroducts 37 dient das erste Abfangelement 26. Zur Abfangung der drei Mikrokabel 30 dient das zweite Abfangelement 29. Zur Abfangung der drei Zentralelemente 44 dient das dritte Abfangelement 45, wobei alle drei Abfangelemente 26, 29 und 45 mit Abstand voneinander gemeinsam auf dem Befestigungselement 34 gelagert sind. Das zweite Abfangelement 29 ist, wie bereits erwähnt, in montiertem Zustand zwischen dem ersten Abfangelement 26 und dem dritten Abfangelement 45 positioniert. Am ersten Abfangelement 26 ist das Lagerungsmodul 22 der Lagerungseinrichtung 21 befestigbar, um die erfindungsgemäße Vorrichtung 20 zum Beispiel an einen Dichtkörper einer Kabelmuffe zu lagern. Hierzu weist das erste Abfangelement 26 eine Ausnehmung 52 (siehe Fig. 3 und 4) auf, in welche das Lagerungsmodul 22 mit einem Abschnitt 53 einführbar ist, wobei in montiertem Zustand die nicht-dargestellte Schelle, welche die Mikroducts 27 am ersten Abfangelement 26 gesichert bzw. fixiert, auch für die Fixierung der Vorrichtung 20 am Lagerungsmodul 22 sorgt.

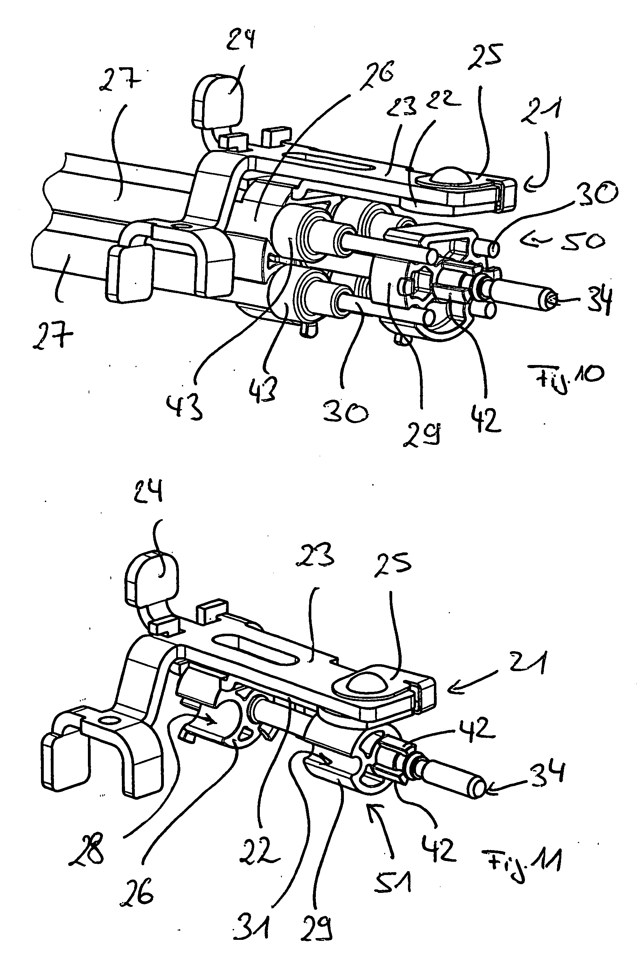

Weitere Ausführungsbeispiele erfindungsgemäßer Vorrichtungen zur Abfangung von in Mikroducts geführten Mikrokabeln sowie der Mikroducts zeigen die Ausführungsbeispiele der Fig. 10 und 11, wobei sich die Ausführungsbeispiele der Fig. 10 und 11 vom Ausführungsbeispiel der Fig. 1 bis 9 lediglich durch die Anzahl der abfangbaren Mikroducts bzw. Mikrokabel unterscheiden. Zur Vermeidung unnötiger Wiederholungen werden daher für gleiche Baugruppen gleiche Bezugsziffern verwendet, und es wird auf die Ausführungen zum Ausführungsbeispiel der Fig. 1 bis 9 verwiesen. Nachfolgend wird nur auf die Details eingegangen, durch die sich die Ausführungsbeispiele der Fig. 10 und 11 vom Ausführungsbeispiel der Fig. 1 bis 9 unterscheiden.

Die in Fig. 10 gezeigte, erfindungsgemäße Vorrichtung 50 zur Abfangung von in Mikroducts 27 geführten Mikrokabeln 30 ist so ausgebildet, dass im ersten Abfangelement 26 insgesamt vier Mikroducts 27 sowie im zweiten Abfangelement 29 insgesamt vier Mikrokabel 30 abgefangen werden können. Dementsprechend verfügen im Ausführungsbeispiel der Fig. 10 das erste Abfangelement 26 sowie das zweite Abfangelement 29 über jeweils vier Aufnahmeöffnungen 28 bzw. 31, in welche die Mikroducts 27 bzw. Mikrokabel 30 eingeführt bzw. eingerastet werden können. Die Aufnahmeöffnungen 28 bzw. 31 sind wiederum vorzugsweise über den Umfang der Abfangelemente 26 bzw. 29 gleichverteilt positioniert. Im Ausführungsbeispiel der Fig. 10 sind die abzufangenden Mikrokabel 30 als zentralelementlose Mikrokabel ausgeführt, so dass im Ausführungsbeispiel der Fig. 10 auf das dritte Abfangelement zur Abfangung von Zentralelementen verzichtet werden kann.

Fig. 11 zeigt im Ausführungsbeispiel einer erfindungsgemäßen Vorrichtung 21, die der Abfangung eines einzigen in einem Mikroduct 27 geführten Mikrokabels 30 dient. Dementsprechend verfügt das erste Abfangelement 26 sowie das zweite Abfangelement 29 lediglich jeweils über eine Aufnahmeöffnung 28 bzw. 31, in welche der Mikroduct bzw. das Mikrokabel eingerastet werden können. In Fig. 11 sind der Mikroduct sowie das Mikrokabel nicht dargestellt.

Mit Hilfe der in Fig. 1 bis 11 dargestellten, erfindungsgemäßen Vorrichtungen sind in Mikroducts geführte Mikrokabel sicher sowie einfach im Bereich einer Lichtwellenleiterverteilereinrichtung, insbesondere im Bereich einer Kabelmuffe, abfangbar. Die erfindungsgemäßen Vorrichtungen verfügen über mindestens zwei Abfangelemente, nämlich ein erstes Abfangelement zur Zugabfangung und Torsionsabfangung von Mikroducts sowie eine zweites Abfangelement zur Zugabfangung und Torsionsabfangung der in den Mikroducts geführten Mikrokabeln. Sämtliche Baugruppen der erfindungsgemäßen Vorrichtungen sind im Sinne eines Plug and Play-Prinzips ineinander einsteckbar, so dass zur Montage bzw. Abfangung von in Mikroducts geführten Mikrokabeln keine speziellen Werkzeuge erforderlich sind. Zur zusätzlichen Fixierung der Mikroducts bzw. Mikrokabel im Bereich der jeweiligen Abfangelemente werden vorzugsweise Schraubschellen bzw. Kabelbinder um die Abfangelemente gespannt, um so die Abfangung zu optimieren. Über mit den Vorrichtungen zusammenwirkende Lagerungseinrichtungen sind die erfindungsgemäßen Vorrichtungen einfach im Bereich einer Lichtwellenleiterverteilereinrichtung befestigbar bzw. lagerbar.

### Bezugszeichenliste

- 20: Vorrichtung
- 21: Lagerungseinrichtung
- 22: Lagerungsmodul
- 23: Lagerungsbasis
- 24: Vorsprung
- 25: Verbindungselement
- 26: erstes Aufnahmeelement
- 27: Mikroducts
- 28: Aufnahmeöffnung
- 29: zweites Aufnahmeelement
- 30: Mikrokabel
- 31: Aufnahmeöffnung
- 32: Vorsprung
- 33: Vorsprung
- 34: Befestigungselement
- 35: Bohrung
- 36: Bohrung
- 37: Abschnitt
- 38: Abschnitt
- 39: Abschnitt
- 40: Absatz
- 41: Verankerungselement
- 42: Verankerungselement
- 43: Dichtelement
- 44: Zentralelement
- 45: drittes Aufnahmeelement
- 46: Abschnitt
- 47: Bohrung
- 48: Verankerungselement

- 49: Aufnahmeöffnung
- 50: Vorrichtung
- 51: Vorrichtung
- 52: Ausnehmung
- 53: Abschnitt

## Patentansprüche

1. Vorrichtung zur Abfangung von in Mikroducts bzw. Miniducts geführten Mikrokabeln bzw. Minikabeln sowie der Mikroducts bzw. Miniducts, wobei in jedem Mikroduct jeweils ein Mikrokabel aufgenommen ist, mit einem ersten Abfangelement (26) zur Abfangung mindestens eines Mikroducts (27) und mit einem zweiten Abfangelement (29) zur Abfangung mindestens eines Mikrokabels (30), wobei das erste Abfangelement (26) und das zweite Abfangelement (29) an einem gemeinsamen Befestigungselement (34) mit Abstand voneinander gelagert sind, **dadurch gekennzeichnet, dass** das Befestigungselement (34) zur Aufnahme bzw. Lagerung des ersten Abfangelements (26) und des zweiten Abfangelements (29) als stabförmige Befestigungsachse ausgebildet ist, welche in Ausnehmungen bzw. Bohrungen (35, 36) der Abfangelemente (26, 29) geführt ist und dieselben durchdringt, wobei die Befestigungsachse Abschnitte (37, 38) zur Lagerung der Abfangelemente (26, 29) aufweist, deren Aussendurchmesser an den Innendurchmesser der Bohrung (35, 36) in dem aufzunehmenden Abfangelement (26, 29) angepasst ist, und wobei die Position der Abfangelemente (26, 29) auf den Abschnitten (37, 38) des Befestigungselements (34) durch widerhakenartige Verankerungselemente (41, 42) gesichert ist, die mit im Bereich der Abschnitte (37, 38) ausgebildeten Absätzen (40) zusammenwirken.

2. Vorrichtung nach Anspruch 1, **dadurch gekennzeichnet, dass** das erste Abfangelement (26) für den oder jeden Mikroduct (27) mindestens eine kreissegmentförmige Aufnahmeöffnung (28) aufweist, wobei in jede kreissegmentförmige Aufnahmeöffnung des ersten Abfangelements (26) jeweils ein Mikroduct (27) einsteckbar bzw. einrastbar ist.

3. Vorrichtung nach Anspruch 1 oder 2, **dadurch gekennzeichnet, dass** das zweite Abfangelement (29) für das oder jedes Mikrokabel (30) mindestens eine kreissegmentförmige Aufnahmeöffnung (31) aufweist, wobei in jede kreissegmentförmige Aufnahmeöffnung des zweiten Abfangelements (29) jeweils ein Mikrokabel (30) einsteckbar bzw. einrastbar ist.

4. Vorrichtung nach einem oder mehreren der Ansprüche 1 bis 3, **gekennzeichnet durch** ein drittes Abfangelement (45) zur Abfangung eines Zentralelements (44) des oder jedes Mikrokabels, wobei das dritte Abfangelement (45) zusammen mit dem ersten Abfangelement (26) und dem zweiten Abfangelement (29) an dem gemeinsamen Befestigungselement (34) derart gelagert ist, dass das zweite Abfangelement (29) für das oder jedes Mikrokabel zwischen dem ersten Abfangelement (26) für den oder jeden Mikroduct und dem dritten Abfangelement (45) für das oder jedes Zentralelement mit Abstand von denselben positioniert ist.

5. Vorrichtung nach Anspruch 4, **dadurch gekennzeichnet, dass** das dritte Abfangelement (45) mindestens eine Aufnahmeöffnung (49) aufweist, wobei in jede Aufnahmeöffnung (49) des dritten Abfangelements (45) jeweils ein Zentralelement (44) eines Mikrokabels (30) einsteckbar ist.

6. Vorrichtung nach einem oder mehreren der Ansprüche 1 bis 5, **dadurch gekennzeichnet, dass** das als stabförmige Befestigungsachse ausgebildete Befestigungselement (34) auch der Aufnahme bzw. Lagerung des dritten Abfangelements (45) dient, wobei die Befestigungsachse in eine Ausnehmung bzw. Bohrung (47) des dritten Abfangelements (45) geführt ist und dasselbe durchdringt, wobei die Befestigungsachse einen Abschnitt (46) zur Lagerung des dritten Abfangelements aufweist, dessen Aussendruchmesser an den Innendurchmesser der Bohrung (47) in dem dritten Abfangelement (45) angepasst ist, und wobei die Position des dritten Abfangelements auf dem Abschnitt (46) der Befestigungsachse durch widerhakenartige Verankerungselemente (48) gesichert ist.

7. Vorrichtung nach einem oder mehreren der Ansprüche 1 bis 6, **dadurch gekennzeichnet, dass** das erste Abfangelement (26) für die Zugabfangung und Torsionsabfangung der Mikroducts (27) und das zweite Abfangelement (29) für die Zugabfangung und Torsionsabfangung der Mikrokabel (30) über den Umfang derselben verteilt mehrere kreissegmentförmige Aufnahmeöffnung (28, 31) aufweisen, in welche jeweils ein Mikroduct (27) bzw. Mikrokabel (30) einsteckbar bzw. einrastbar ist.

8. Vorrichtung nach einem oder mehreren der Ansprüche 1 bis 7, **gekennzeichnet durch** mindestens ein Dichtelement (43), um einen Mikroduct (27) vorzugsweise gegenüber dem in dem Mikroduct (27) geführten Mikrokabel (30) abzudichten, wobei das oder jedes Dichtelement (43) zwischen dem ersten Abfangelement (26) für den oder jeden Mikroduct (27) und dem zweiten Abfangelement (29) für das oder jedes Mikrokabel (30) positioniert ist.

9. Vorrichtung nach Anspruch 8, **dadurch gekennzeichnet, dass** das oder jedes Dichtelement (43) als Tülle auf den jeweiligen Mikroduct (27) und vorzugsweise das entsprechende Mikrokabel (30) aufgeschoben und vorzugsweise auf dem jeweiligen Mikroduct (27) über einen Kabelbinder fixiert ist.

10. Vorrichtung nach einem oder mehreren der Ansprüche 1 bis 9, **dadurch gekennzeichnet, dass** die erste Abfangeinrichtung (26) für die Mikroducts eine Ausnehmung (52) aufweist, in welche ein Lagerungsmodul (22) einer Lagerungseinrichtung (21) einführbar ist, um die Vorrichtung zur Abfangung von in Mikroducts bzw. Miniducts geführten Mikrokabeln bzw. Minikabeln an dem Lagerungsmodul (22) zu befestigen und über das Lagerungsmodul (22) bzw. die Lagerungseinrichtung (21) an einer Lichtwellenleiterverteilereinrichtung, insbesondere an einem Dichtkörper einer Kabelmuffe, zu lagern.

11. Vorrichtung nach einem oder mehreren der Ansprüche 1 bis 10, **dadurch gekennzeichnet, dass** der oder jeder in das erste Abfangelement (26) einsteckte Mikroduct (27) und/oder das oder jedes in das zweite Abfangelement (29) einsteckte Mikrokabel (30) über einen Kabelbinder oder eine Schelle in ihrer Position am jeweiligen Abfangelement (26, 29) gesichert sind.

## Claims

1. Apparatus for restraining microcables or minicables routed in microducts or miniducts as well as the microducts or miniducts, in each case one microcable being accommodated in each microduct, with a first restraining element (26) for restraining at least one microduct (27) and with a second restraining element (29) for restraining at least one microcable (30), the first restraining element (26) and the second restraining element (29) being mounted at a distance from one another on a common fastening element (34), **characterized in that** the fastening element (34) for accommodating or mounting the first restraining element (26) and the second restraining element (29) is in the form of a rod-shaped fastening spindle, which is guided into cutouts or bores (35, 36) in the restraining elements (26, 29) and passes through said cutouts or bores, the fastening spindle having sections (37, 38) for mounting the restraining elements (26, 29), whose outer diameter is matched to the inner diameter of the bore (35, 36) in the restraining element (26, 29) to be accommodated, and the position of the restraining elements (26, 29) on the sections (37, 38) of the fastening element (34) being secured by barb-like anchoring elements (41, 42), which interact with shoulders (40) formed in the region of the sections (37, 38).

2. Apparatus according to Claim 1, **characterized in that** the first restraining element (26) has at least one accommodating opening (28) in the form of a circle segment for the or each microduct (27), it being possible for in each case one microduct (27) to be plugged or latched into each accommodating opening, in the form of a circle segment, in the first restraining element (26).

3. Apparatus according to Claim 1 or 2, **characterized in that** the second restraining element (29) has at least one accommodating opening (31) in the form of a circle segment for the or each microcable (30), it being possible for in each case one microcable (30) to be plugged or latched into each accommodating opening, in the form of a circle segment, in the second restraining element (29).

4. Apparatus according to one or more of Claims 1 to 3, **characterized by** a third restraining element (45) for restraining a central element (44) of the or each microcable, the third restraining element (45) being mounted together with the first restraining element (26) and the second restraining element (29) on the common fastening element (34) in such a way that the second restraining element (29) for the or each microcable is positioned between the first restraining element (26) for the or each microduct and the third restraining element (45) for the or each central element, at a distance therefrom.

5. Apparatus according to Claim 4, **characterized in that** the third restraining element (45) has at least one accommodating opening (49), it being possible for in each case one central element (44) of a microcable (30) to be plugged into each accommodating opening (49) in the third restraining element (45).

6. Apparatus according to one or more of Claims 1 to 5, **characterized in that** the fastening element (34), which is in the form of a rod-shaped fastening spindle, is also used for accommodating or mounting the third restraining element (45), the fastening spindle being guided into a cutout or bore (47) in the third restraining element (45) and passing through said cutout or bore, the fastening spindle having a section (46) for mounting the third restraining element, whose outer diameter is matched to the inner diameter of the bore (47) in the third restraining element (45), and the position of the third restraining element on the section (46) of the fastening spindle being secured by barb-like anchoring elements (48).

7. Apparatus according to one or more of Claims 1 to 6, **characterized in that** the first restraining element (26) for the tensile restraint and torsional restraint of the microducts (27) and the second restraining element (29) for the tensile restraint and torsional restraint of the microcables (30) have a plurality of accommodating openings (28, 31), in the form of circle segments, which are distributed over the circumference of said restraining elements and into which it is possible for in each case one microduct (27) or microcable (30) to be plugged or latched.

8. Apparatus according to one or more of Claims 1 to 7, **characterized by** at least one sealing element (43) in order to seal a microduct (27) preferably with respect to the microcable (30) routed in the microduct (27), the or each sealing element (43) being positioned between the first restraining element (26) for the or each microduct (27) and the second restraining element (29) for the or each microcable (30).

9. Apparatus according to Claim 8, **characterized in that** the or each sealing element (43) has been pushed, in the form of a bush, onto the respective microduct (27) and preferably the corresponding microcable (30) and is preferably fixed on the respective microduct (27) via a cable tie.

10. Apparatus according to one or more of Claims 1 to 9, **characterized in that** the first restraining device (26) for the microducts has a cutout (52), into which a mounting module (22) of a mounting device (21) can be inserted in order to fasten the apparatus for restraining microcables or minicables routed in microducts or miniducts on the mounting module (22) and in order to mount said apparatus on an optical waveguide distribution device, in particular on a sealing body of a cable sleeve, via the mounting module (22) or the mounting device (21).

11. Apparatus according to one or more of Claims 1 to 10, **characterized in that** the or each microduct (27) which has been inserted into the first restraining element (26) and/or the or each microcable (30) which has been inserted into the second restraining element (29) is secured in its position on the respective restraining element (26, 29) by a cable tie or a clip.

## Revendications

1. Dispositif pour retenir des microcâbles ou des minicâbles guidés dans des microconduits ou des miniconduits, ainsi que les microconduits ou les miniconduits, un microcâble étant reçu à chaque fois dans chaque microconduit, avec un premier élément de retenue (26) pour retenir au moins un microconduit (27) et avec un deuxième élément de retenue (29) pour retenir au moins un microcâble (30), le premier élément de retenue (26) et le deuxième élément de retenue (29) étant montés à distance l'un de l'autre sur un élément de fixation commun (34), **caractérisé en ce que** l'élément de fixation (34) est réalisé sous forme d'axe de fixation en forme de barre pour recevoir ou supporter le premier élément de retenue (26) et le deuxième élément de retenue (29), lequel axe de fixation est guidé dans des évidements ou des alésages (35, 36) des éléments de retenue (26, 29) et les traverse, l'axe de fixation présentant des portions (37, 38) pour le support des éléments de retenue (26, 29), dont le diamètre extérieur est adapté au diamètre intérieur de l'alésage (35, 36) dans l'élément de retenue à recevoir (26, 29), et la position des éléments de retenue (26, 29) sur les portions (37, 38) de l'élément de fixation (34) étant fixée par des éléments d'ancrage de type barbes (41, 42), qui coopèrent avec des retraits (40) réalisés dans la région des portions (37, 38).

2. Dispositif selon la revendication 1, **caractérisé en ce que** le premier élément de retenue (26) pour le ou chaque microconduit (27) présente au moins une ouverture de réception (28) en forme de segment de cercle, un microconduit (27) respectif pouvant être enfiché ou encliqueté dans chaque ouverture de réception en forme de segment de cercle du premier élément de retenue (26).

3. Dispositif selon la revendication 1 ou 2, **caractérisé en ce que** le deuxième élément de retenue (29) pour le ou chaque microcâble (30) présente au moins une ouverture de réception (31) en forme de segment de cercle, un microcâble (30) respectif pouvant être enfiché ou encliqueté dans chaque ouverture de réception en forme de segment circulaire du deuxième élément de retenue (29).

4. Dispositif selon l'une quelconque ou plusieurs des revendications 1 à 3, **caractérisé par** un troisième élément de retenue (45) pour retenir un élément central (44) du ou de chaque microcâble, le troisième élément de retenue (45) conjointement avec le premier élément de retenue (26) et le deuxième élément de retenue (29) étant monté sur l'élément de fixation commun (34) de telle sorte que le deuxième élément de retenue (29) pour le ou chaque microcâble soit positionné entre le premier élément de retenue (26) pour le ou chaque microconduit et le troisième élément de retenue (45) pour le ou chaque élément central, à distance de ceux-ci.

5. Dispositif selon la revendication 4, **caractérisé en ce que** le troisième élément de retenue (45) présente au moins une ouverture de réception (49), à chaque fois un élément central (44) d'un microcâble (30) pouvant être enfiché dans chaque ouverture de réception (49) du troisième élément de retenue (45).

6. Dispositif selon l'une quelconque ou plusieurs des revendications 1 à 5, **caractérisé en ce que** l'élément de fixation (34) réalisé sous forme d'axe de fixation en forme de barre sert aussi à recevoir ou supporter le troisième élément de retenue (45), l'axe de fixation étant guidé dans un évidement ou un alésage (47) du troisième élément de retenue (45) et traversant celui-ci, l'axe de fixation présentant une portion (46) pour supporter le troisième élément de retenue, dont le diamètre extérieur est adapté au diamètre intérieur de l'alésage (47) dans le troisième élément de retenue (45), et la position du troisième élément de retenue sur la portion (46) de l'axe de fixation étant fixée par des éléments d'ancrage (48) de type barbes.

7. Dispositif selon l'une quelconque ou plusieurs des revendications 1 à 6, **caractérisé en ce que** le premier élément de retenue (26) pour la retenue en traction et la retenue en torsion des microconduits (27) et le deuxième élément de retenue (29) pour la retenue en traction et la retenue en torsion des microcâbles (30) présentant plusieurs ouvertures de réception (28, 31) en forme de segment de cercle réparties sur la périphérie de ceux-ci, dans lesquelles peut être enfiché ou encliqueté à chaque fois un microconduit (27) ou un microcâble (30) respectif.

8. Dispositif selon l'une quelconque ou plusieurs des revendications 1 à 7, **caractérisé par** au moins un élément d'étanchéité (43), pour étancher un microconduit (27) de préférence par rapport au microcâble (30) guidé dans le microconduit (27), le ou chaque élément d'étanchéité (43) pouvant être positionné entre le premier élément de retenue (26) pour le ou chaque microconduit (27) et le deuxième élément de retenue (29) pour le ou chaque microcâble (30).

9. Dispositif selon la revendication 8, **caractérisé en ce que** le ou chaque élément d'étanchéité (43) est poussé sous forme de manchon sur le microconduit respectif (27) et de préférence le microcâble correspondant (30), et est fixé de préférence sur le microconduit respectif (27) par le biais d'une connexion de câble.

10. Dispositif selon l'une quelconque ou plusieurs des revendications 1 à 9, **caractérisé en ce que** le premier dispositif de retenue (26) pour les microconduits présente un évidement (52), dans lequel un module de support (22) d'un dispositif de support (21) peut être introduit, afin de fixer le dispositif pour retenir des microcâbles ou des minicâbles guidés dans des microconduits ou des miniconduits sur le module de support (22) et pour le supporter par le biais du module de support (22) ou du dispositif de support (21) sur un dispositif répartiteur de fibres optiques, notamment sur un corps d'étanchéité d'un manchon de câble.

11. Dispositif selon l'une quelconque ou plusieurs des revendications 1 à 10, **caractérisé en ce que** le ou chaque microconduit (27) enfiché dans le premier élément de retenue (26) et/ou le ou chaque microcâble (30) enfiché dans le deuxième élément de retenue (29) sont fixés par le biais d'une connexion de câble ou d'un collier de serrage dans leur position sur l'élément de retenue respectif (26, 29).
